# EUROPEAN PATENT SPECIFICATION

(11) **EP 3 246 289 B1**
(45) Date of publication and mention of the grant of the patent: **09.12.2020**
(21) Application number: 16170477.0
(22) Date of filing: 19.05.2016
(51) Int. Cl.: C01F 11/22, B01D 53/68, C01B 7/19

(54) **GENERATION OF CALCIUM FLUORIDE FROM HF GAS STREAMS**
ERZEUGUNG VON CALCIUMFLUORID AUS HF-GASSTRÖMEN
GÉNÉRATION DE FLUORURE DE CALCIUM À PARTIR DE COURANTS DE GAZ HF

(43) Date of publication of application: 22.11.2017
(73) Proprietor: 3M Innovative Properties Company, Saint Paul, MN 55133-3427 (US)
(72) Inventor: Zipplies, Tilman, 84489 Burghausen (DE); Hintzer, Klaus, 84556 Kastl (DE); Willert-Porada, Monika, 95440 Bayreuth (DE); Schmidt-Rodenkirchen, Achim, 95448 Bayreuth (DE); Berger, Thomas, 92551 Stulln (DE); Gerdes, Thorsten, 95440 Bayreuth (DE); Schymura, Christoph, 95448 Bayreuth (DE); Spiewok, Andreas, 95440 Bayreuth (DE)
(74) Representative: Hettstedt, Stephan

(56) References cited:
- WO-A1-2007/144665
- GB-A- 752 803
- US-A- 2 573 704
- US-A- 2 919 174
- US-B1- 6 451 274
- SHINJI YASUI ET AL: "Gas-Solid Reaction Properties of Fluorine Compounds and Solid Adsorbents for Off-Gas Treatment from Semiconductor Facility", INTERNATIONAL JOURNAL OF CHEMICAL ENGINEERING, vol. 2012, 1 January 2012 (2012-01-01), pages 1-9, XP055314743, US ISSN: 1687-806X, DOI: 10.1155/2012/329419

## Description

### Field

The disclosure relates to a method for producing calcium fluoride particles from gas streams containing gaseous hydrogen fluoride (HF).

### Background Art

Naturally occurring CaF2 minerals (e.g. fluorspar) are the principal source for anhydrous hydrogen fluoride (HF) used in the chemical industry. Hydrogen fluoride can be liberated from the mineral for example by the action of concentrated sulfuric acid:

CaF₂ + H₂SO₄ → CaSO₄ + 2 HF

However, there is a need to find alternative ways of access to calcium fluoride to reduce the dependency from calcium fluoride mines.

Calcium fluoride is generated as a by-product of the purification of waste streams containing HF. Exhaust gases or waste streams containing HF are directed into an aqueous solutions containing calcium hydroxide upon which calcium fluoride precipitates. Such processes are described, for example in US 3,743,704 and EP 0 536 051. However, the resulting CaF2 precipitates are too fine to be processed at industrial scale for the generation of anhydrous HF. To improve the handling properties of the precipitated calcium fluoride, organic precipitation agents (flocculants) can be added that increase the particle size of the precipitates. However, the particles then contain undesired organic contaminants. US 4,120,940 and EP 2,952,478 A1 report the formation of CaF2 particles from an aqueous phase that are larger than 100 µm. However, the reaction still takes place in an aqueous phase. Such "wet" processes consume considerable amounts of water that has to be consumed and treated before it can be released back in the environment.

Some research was done in investigating "dry" conversion processes. Several studies report the generation of CaF2 in a dry process by directing an HF-containing gas over solid CaCO₃ particles in a fixed bed reactor, for example: Yasui et al. describe in International Journal of Chemical Engineering, Volume 2012 (2012), No 6, page 1-9, http://dx.doi.org/10.1155/2012/329419. - DOI 10.1155/2012/329419 - ISSN 1687-806X, Yang et al, Wat. Res. Vol. 33, N0 16, pp 3395-3402, 1999, Yasue et al, CHISA 2008, Praha (2008), Yasui et al, AlChE Annual Meeting 2007, Salt Lake City, Paper No 173d (2007).

There is a need for generating CaF2 particles suitable for industrial conversion of CaF2 to anhydrous HF. Desirably the process employs HF gas generated from waste materials, preferably from waste materials comprising or consisting of partially fluorinated materials such as fluoropolymers.

### Brief Description of Figures

Figure 1 shows a schematic drawing of the process for generating CaF2 suitable for the production of anhydrous hydrogen fluoride according to the present disclosure.
Figure 2 shows a schematic drawing illustrating the experimental set up used in experiments 1 and 2.

### Detailed Description of the Invention

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. Also, it is to be understood that the phraseology and terminology used herein is for the purpose of description and should not be regarded as limiting. The use of "including," "containing", "comprising," or "having" and variations thereof is meant to encompass the items listed thereafter as well as additional items. The use of "consisting of" is meant to be limiting to the items listed thereafter.

The use of "a" or "an" is meant to encompass "one or more". Any numerical range recited herein is intended to include all values from the lower value to the upper value of that range. For example, a concentration range of from 1% to 50% is intended to be an abbreviation and to expressly disclose the values between the 1% and 50%, such as, for example, 2%, 40%, 10%, 30%, 1.5 %, 3.9 % and so forth.

In the process of the present disclosure a gas stream containing gaseous hydrogen fluoride is fed into a reactor having a bed comprising solid calcium carbonate particles. The carbonate particles react with the HF and are converted into calcium fluoride particles. The process is carried out in a fluidized bed reactor. The bed comprising the calcium carbonate or consisting of calcium carbonate particles is fluidized by a gaseous fluidization medium, which means the particles are suspended in the gas flow of the fluidizing medium. The reaction conditions are chosen such that calcium fluoride particles result that are suitable for the industrial production of anhydrous hydrogen fluoride (AHF).

### Calcium fluoride particles

Typically, calcium fluoride particles suitable for the production of anhydrous hydrogen fluoride have a mean particle size (d50) of at least 15 µm, preferably at least 30 µm. The upper range preferably is up to about 300 µm, more preferably less than 200 µm, more preferably up to and including 100 µm. In a preferred embodiment the resulting particles have a mean particle size (d50) of from about 30 µm to 100 µm. The mean particle size (d50) is the median of a particle size distribution. It is the value where half of the population resides above and half of the population resides below this point. Calcium fluoride particles with a d50 of less than 15 µm are generally too difficult to handle and may react prematurely in the mixing equipment and blocking it. Particles with a particle size (d50) greater than 300 µm may react too slowly and the yield is not economical. Also, the resulting by-product CaSO₄ contains too much unreacted CaF2 that it cannot be used as raw material in commercial applications.

In the process according to the present disclosure, the calcium carbonate particles convert into calcium fluoride particles by reaction with gaseous hydrogen fluoride (HF). The conversion is believed to start on the surface of the calcium carbonate particles and progresses from there to the core. Preferably, the conversion or purity of the resulting calcium fluoride particles, i.e. the CaF2 content, is greater than 90%, more preferably greater than 95%, and most preferably at least 97% (the percentages are weight percentages).

### Calcium carbonate particles

Suitable calcium carbonate particles for use in the process of the present invention are particles having a particle size (d50) of at least 25 µm. Preferably, less than 10% (by weight), more preferably less than 5% by weight and most preferably less than 3% by weight of the calcium carbonate particles have a particle size of less than 3 µm. The CaF2 particles may shrink to some extent during the reaction with increasing conversion, which is believed to be the result of attrition between particles in the fluidized bed. Somewhat larger calcium carbonate particles may be used as starting material in case the reduction of the particle size is too great or the reaction can be stopped at a lower conversion rate. Also the flow rate of the fluidizing medium can be adjusted to control the attrition. The flow rate should be high enough to suspend the particles in the fluidizing medium and keeping them suspended thus forming a stable fluidized bed. Higher volume flows may destabilize the fluidized bed and may lead to greater attrition of the particles. Thus depending on the reactor design and reaction conditions the particle sized of the starting material may be adjusted. Calcium carbonate particles having a d50 of at least about 25 µm are used in the present process to provide CaF2 of from about 15µm to about 300 µm particle size (d50). Preferred particle sizes of CaCO₃ include ranges from about 25 µm to about 700 µm, more preferably from about 30 to about 300 µm and more preferably from about 40 to about 150 µm.

Preferably, the calcium carbonate particles have a purity of at least about 90% (weight percent). In one embodiment the calcium carbonate particles have a specific surface area (BET) of less than 10 m²/g, for example between 0.1 and 1 m²/g. The specific surface area (BET) can be determined using a Micromeritics ASAP 2012 analyser from Micromeritics GmbH, Aachen, Germany.

Suitable calcium carbonate particles are commercially available. The desired particle sizes can be obtained from sieved fractions obtained by grinding larger particles.

The calcium carbonate particles form the fluidized bed in the fluidized bed reactor where they are being converted into CaF2. The chemical composition of the fluidized bed thus changes from calcium carbonate towards calcium fluoride during the course of the reaction. Although a fluidized bed preferably consists of calcium carbonate particles at the beginning of the reaction it is also contemplate that the bed may comprise other particles, preferably inert particles that do not react under the reaction conditions and that can be separated from the generated calcium fluoride particles. Such particles may be used, for example, to influence the heat distribution in the reaction or to control the volume of particle flow.

### Gas stream comprising gaseous HF

The calcium carbonate particles are contacted by a gas stream containing gaseous HF. Preferably this gas stream is also the fluidizing medium suspending the calcium carbonate particles to form a fluidized bed. However, it is also possible that the HF containing gas stream is only part of the fluidizing medium and is present, for example as a mixture with one or more other gas streams. The gas streams containing HF are those generated by the incineration of one or more fluorinated materials comprising one or more partially fluorinated polymers. Fluorinated materials include materials that are solid, liquid or gaseous at ambient conditions (20°C, 1013 hPa). Suitable fluorinated materials include fluorinated hydrocarbons and substituted fluorinated hydrocarbons, i.e. fluorinated hydrocarbons that further contain atoms other than carbon, hydrogen and fluorine. Such other atoms may include chlorine, nitrogen, oxygen atoms and combinations thereof. The fluorinated material comprises one or more partially fluorinated polymers. Suitable partially fluorinated polymers contain repeating units derived from fluorinated olefins having one or more carbon-carbon unsaturation, one or more fluorine and one or more hydrogen atom. Such polymers may have a molecular weight of more than 5,000 g/mole. Such polymers are typically solids. Suitable examples of partially fluorinated polymers include copolymers that have a backbone that is at least 30% by weight fluorinated, preferably at least 50% by weight fluorinated, more preferably at least 65% by weight fluorinated but also include hydrogen atoms. Examples of suitable partially fluorinated fluoropolymers include polymers and copolymers (i) comprising one or more partially fluorinated monomers, (ii) comprising one or more partially fluorinated monomers and one or more perfluorinated monomers, (iii) comprising one or more perfluorinated or partially fluorinated monomers in combination with one or more non-fluorinated monomers. Examples of perfluorinated monomers include fluorinated C₂-C₈ olefins that contain fluorine and chlorine atoms but no hydrogen atoms. Examples include tetrafluoroethene (TFE), hexafluoropropene (HFP); chlorotrifluoroethene (CTFE), 2-chloropentafluoropropene, dichlorodifluoroethene, 1,1-difluorethene, perfluorinated vinyl ethers (collectively referred to as PVE) and perfluorinated allyl ethers (collectively referred to as PAE). Examples of suitable perfluorinated allyl and vinyl ethers include those corresponding to the general formula

CF₂=CF-(CF₂)ₙ-O-Rf (I).

In formula (I) n represents either 0 or 1. Rf represents a linear or branched, cyclic or acyclic perfluorinated alkyl residue containing at least one catenary oxygen atom. Rf may contain up to 8, preferably, or up to 6 carbon atoms, such as 1, 2, 3, 4, 5 and 6 carbon atoms. Typical examples of Rf include linear, branched alkyl residues interrupted by one oxygen atom, and linear or branched alkyl residues containing 2, 3, 4 or 5 catenary ether oxygens. Further examples of Rf include residues containing one or more of the following units and combinations thereof:
-(CF₂O)-, -(CF₂CF₂-O)-, (-O-CF₂)-, -(O-CF₂CF₂)-, -CF(CF₃)-, -CF(CF₂CF₃)-, -O-CF(CF₃)-, -O-CF(CF₂CF₃)-, -CF(CF₃)-O-, -CF(CF₂CF₃)-O-. Further examples of Rf include but are not limited to: -(CF₂)ᵣ₁-O-C₃F_{7;} -(CF₂)ᵣ₂-O-C₂F_{5;} -(CF₂)ᵣ₃-O-CF_{3;} -(CF₂-O)ₛ₁-C₃F_{7;} -(CF₂-O)ₛ₂-C₂F_{5;} -(CF₂-O)ₛ₃-CF_{3;} -(CF₂CF₂-O)ₜ₁-C₃F_{7;} -(CF₂CF₂-O)t₂-C₂F_{5;} -(CF₂CF₂-O)ₜ₃-CF_{3;} wherein r1 and s1 represent 1, 2, 3, 4, or 5, r2 and s2 represent 1, 2, 3, 4, 5 or 6, r3 and s3 represent 1, 2, 3, 4, 5, 6 or 7; t1 represents 1 or 2; t2 and t3 represent 1, 2 or 3.

Suitable non-fluorinated comonomers include 1-chloroethene, 1,1-dichloroethene, and C₂-C₈ olefins such as ethene (E) and propene (P).

Examples of partially fluorinated monomers include fluorinated olefins that contain at least one hydrogen atom. Such olefins may additionally contain one or more oxygen atom and one or more chlorine atom. Specific examples of partially fluorinated copolymers include copolymers having a combination of monomers as follows: VDF-HFP, TFE-P, VDF-TFE-HFP, VDF-TFE-PVE, TFE-HFP, E-TFE-HFP, TFE-PVE, E-TFE-PVE and any of the aforementioned copolymers further including units derived from a chlorine containing monomer such as CTFE.

The incineration of the fluorinated material is preferably carried out in the presence of oxygen or a mixture of gases containing oxygen (incinerating gas). Depending on the starting materials and reaction conditions the oxygen content of air may be sufficient as incineration gas, otherwise additional oxygen may be added. The optimum conditions for incinerating the fluorinated materials may be determined experimentally by test reactions.

In the incineration reaction the partially fluorinated material typically gets mainly converted into CO₂ and HF and H₂O. The incineration reacts starts automatically in the presence of oxygen and the right temperature. However, it may be triggered by other incinerators or electrically, for example by generating sparks.

The ratio of fluorinated material and incinerating gas, i.e. the concentration of fluorinated material, will determine the HF content of the HF-containing gas produced. Other gases may be present if the fluorinated material contains other atoms than carbon, fluorine and hydrogen. For example, chlorine atoms and nitrogen atoms when present may result in the formation of HCI gas and gaseous nitrogen oxides. Nitrogen oxides may also be generated when air is used as incineration gas. No detrimental effect of nitrogen oxide on the conversion reaction has been observed. However nitrogen oxides should be retained in the exhaust treatment unit. The HF content of the gas may be lowered, if desired, by mixing the gas with one or more inert gases, for example but not limited to nitrogen, helium or other noble gases. The HF content of the HF-containing gas includes amounts of from 0.5 to 50% (volume percent). Preferably, the concentration (volume %) of HF in the gas stream is between 1 and 30 %, more preferably between 3 to 15%. Preferably, the fluorinated material is composed such that approximately equimolar amounts of H and F are present in the fluorinated material. This may be achieved by mixing in other fluorinated materials if the fluorine content is too low, or by mixing in non-fluorinated hydrocarbons in case the amount of fluorine atoms is too high. Liquid and gaseous fluorinated or non-fluorinated materials may be used to adjust the H: F ratio in the fluorinated material to be incinerated.

Since H₂O may be present in the gas stream, the gas stream is kept at a temperature and pressure that avoids the condensation of water to prevent the formation of aqueous hydrogen fluoride. Typically, the gas stream is kept at a temperature of greater than 100°C, preferably greater than 120°C. The incineration of fluorinated materials may be exothermic such that the temperature of the incineration reactor may have to be controlled.

In one embodiment of the present disclosure, the fluorinated material is a solid material. Preferably, its incineration is carried out in a fluidized bed reactor. The fluorinated material may be milled to have the appropriate particle size for forming a fluidized bed if necessary. The incineration gas may be used as fluidizing medium and the solid particles may form the fluidized bed. The incineration reactor is preferably made of steel with a high nickel content (e.g. 15 to 25 weight percent (wt.%) of Ni) and preferably a high content of chromium (e.g. from about 18 to 26 wt%). However, the incineration can also be carried out in a fixed bed reactor, such as for example but not limited to a rotary kiln or a gas incinerator, for example if a liquid or gaseous fluorinated material is used.

In a preferred embodiment of the present disclosure the process a process of converting waste material comprising partially fluorinated polymers into calcium fluoride.

### Process

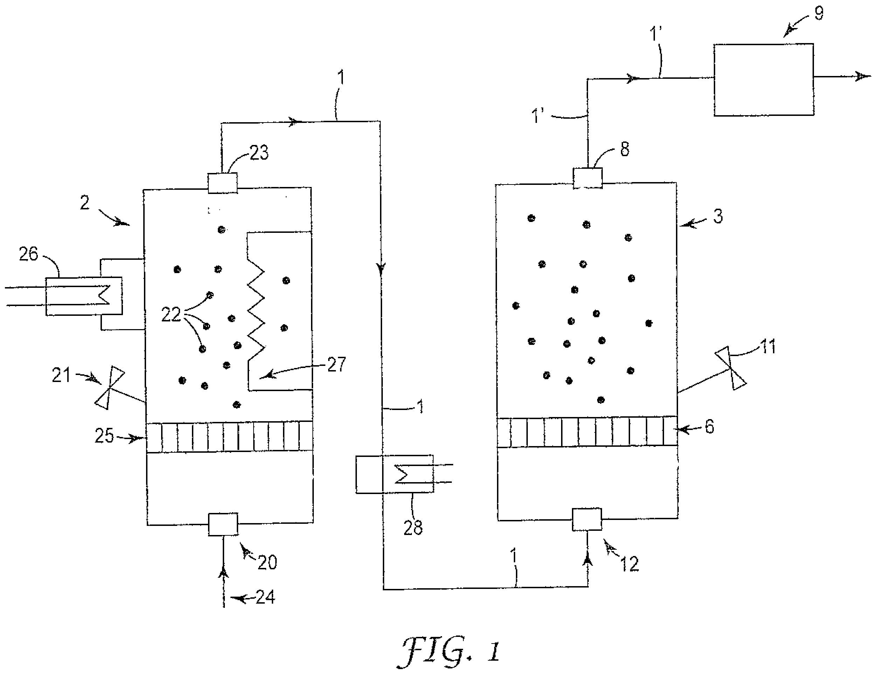

The process of generating calcium fluoride particles will now be described by referring to figure 1 for further illustration. A gas stream containing gaseous HF (1) is fed through inlet (12) into the reactor (3) where the reaction with calcium carbonate will take place. This reactor is also referred to herein as "fluorine fixation reactor". The fluorine fixation reactor (3) is a fluidized bed reactor wherein the calcium carbonate particles (represented as dark dots in reactor (3)) are suspended by a fluidizing medium, which is formed by or comprises the HF gas stream (1). The suspended calcium carbonate particles form the fluidized bed. The gas stream in the reactor is set such that the bed of calcium carbonate particles becomes fluidized, i.e. the particles are suspended by the gas stream. Preferably, the HF-containing gas stream (1) is used as fluidizing medium but it may be mixed with one or more other fluidizing gases. The fluidized bed reactor can be a fluidized bed reactor as known in the art. It dimensions, design and gas flows can be optimised to keep the particles as a fluidized bed as known in the art and as described, for example, in D. Kunii, O. Levenspiel, H. Brenner, "Fluidization Engineering", 2^{nd} edition, 1991 Elsevier Inc.. The volume flow has to be high enough to suspend the particles and keeping them suspended to achieve a stable fluidized bed. Volume flows that are too great may destabilize the fluidized bed and may also lead to great attrition of the particles. The HF-containing gas stream is directed out of the fixation reactor (3) via at least one outlet (8) and leaves the reactor as stream 1'. Stream (1') contains a lower amount of HF than stream (1) because some or all of the HF has reacted with the calcium carbonate particles. The exiting gas stream (1') may be directed to an exhaust treatment unit (9) as illustrated in figure 1, or it may be directed to one or more other fluorine fixation reactor, which can be identical to reactor (3) or can be of different design, before being directed to the exhaust treatment unit (9). Feeding the gas stream (1') to one or more further fluorine fixation reactors before directing it to the exhaust treatment unit (9) may allow for further reductions of HF content in the gas stream by further conversion to calcium fluoride before the gas stream is directed to the exhaust treatment unit (9). Another advantage of using a cascade of fixation reactors instead of a single fixation reactor is that the HF containing gas stream (1) may be directed to a second fixation reactor bypassing the first reactor. The CaF2 particles from the first reactor can then be collected and the reactor bed can be renewed with new calcium carbonate particles without needing to shut down the production of HF gas (1). This way the HF conversion unit can run continuously, even if the individual fluorine fixation reactors may be run batch-wise.

The exhaust treatment unit (9) may comprise one or more quenching units where the exhaust gas may be subjected to an aqueous basic solution to remove acidic residues. The treatment unit may comprise further units to remove solid particles from the gas stream and other impurities such as organic gases.

The fluorine fixation reactor (3) further contains at least one inlet (11) for entering the solid particles for forming the fluidized bed. This inlet may also be used for recovering the particles after the reaction, or a different inlet is installed for removing the CaF2 particles formed. Typically, the gas inlet is at the bottom section of the reactor and the gas outlet is at the head section of the reactor.

Typically, the fixation reactor and the HF-gas supply is kept at a temperature above 100°C to avoid condensation of water and below the service temperature of the reactor material and material for the gas supply, and below the degradation temperature of the calcium carbonate particles. Typical suitable materials include polytetrafluoroethene (PTFE), which typically has a service temperature of up to about 200°C. Steels with a high nickel content may be used if higher temperatures are to be used, should this be desired. Suitable steels include steels having a nickel content of 15 to 25 weight %, preferably also having an additional chromium content of from about 20 to 30 weight %.

According to the present invention and as illustrated in figure 1 the HF-containing gas (1) is generated by the incineration of fluorinated material comprising one or more partially fluorinated polymers. The fluorinated material (22) is incinerated in the incineration reactor (2) in the presence of oxygen. The incineration of the fluorinated material (22) in the presence of oxygen yields the HF gas containing gas stream (1). Typically, the gas stream (1), comprises HF and CO₂ and H₂O as major reaction products from the incineration reaction. H₂O is not detrimental to the process but should be kept in gaseous form. CO₂ is also not detrimental to the process. In a preferred embodiment, the fluorinated material is a solid material in the form of particles. The fluorinated material may be milled into smaller particles if necessary before it is fed into the reactor through solid inlet (21). In case the fluorinated material is in solid or liquid form inlet (21) typically is a pump for liquids and a jet or a pump for solid particles. The incineration reactor further has at least one inlet (20) for the incineration gas or incineration gas mixture (24) and at least one outlet (23) to direct the HF-containing gas (1) generated in the incineration reaction out of the reactor. The incineration reactor can be heated to bring the temperature in the reactor to the necessary level to allow incineration. Typically, the incineration reactor (2) contains at least one heating element (27). The incineration reaction may be exothermic and the reactor may be equipped with one or more cooling elements (26), which are preferably external elements for cooling the reactor wall.

In one embodiment, the incineration reactor (2) is a fluidized bed reactor. However, fixed bed reactors or rotary kilns or other reactors known to be useful in incineration reactions of liquids or solids or gases may also be used. The incineration gas (24) can be used as fluidizing medium and the particles comprising the fluorinated materials (22) may form the fluidized bed. The gas flow is set such that the particles comprising the fluorinated material (22) are suspended and form the fluidized bed of the reactor. Typically, the gas inlet (20) is at the bottom section of the reactor and the gas outlet is at the head of the reactor (23). The gas stream (1) containing the gaseous HF is fed from the outlet (23) to the inlet (12) of the fluorine fixation reactor (2). It may passing through at least one heat exchanger unit (28) to bring the temperature of the HF containing gas stream (1) to the operating temperature in the fixation reactor (2) if required.

### Examples

### Examples 1 and 2

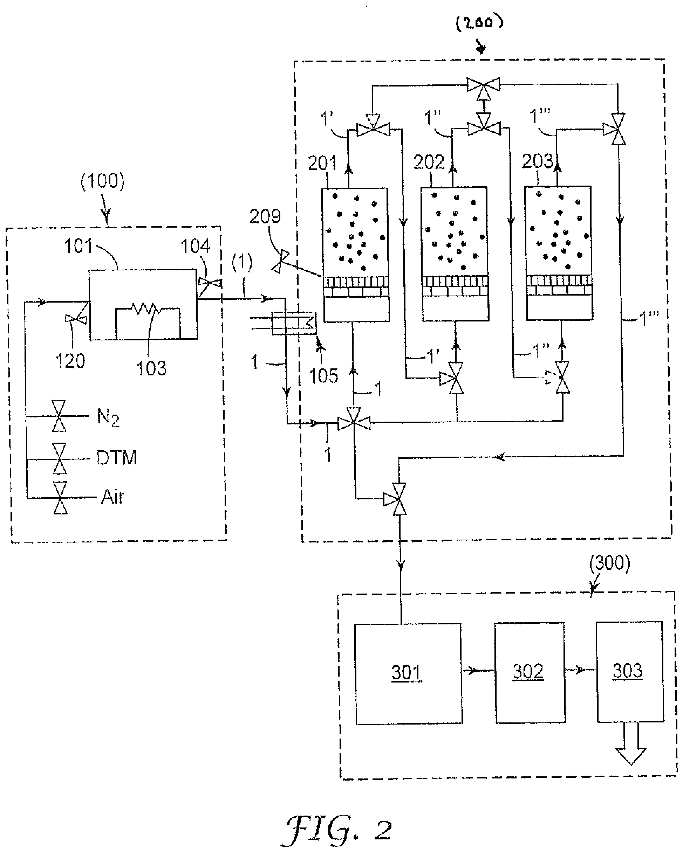

The set up used in examples 1 and 2 is illustrated in figure 2. An incineration unit (100) contained an incineration reactor (101). The reactor (101) was a vertical, tubular reactor made of 1.4841 steel (Ni content between 19 and 22% wt, Cr content between 22 and 26% wt.) and had a length of 800 mm and an inner diameter of 32.4 mm. It had inlets for difluoromethane (DFM) gas flow and air gas flow, and nitrogen gas for purging. The inside of the reactor was heated by an external resistive heating element to 700°C. The reactor walls could be cooled from the outside by an external cooling element (103). The incineration reactor had an outlet (104) for feeding the HF containing gas stream (1) generated in the incineration reactor to the fluorine fixation unit (200) after passing through cooling element (105). The fluorine fixation unit (200) contained a cascade of five identical reactors (201)-(205) (in figure 2 only the first three reactors are shown (201-203)). The reactors were fluidized bed reactors. The gas inlet was at the bottom of the reactors. The gas was fed into the reactors through a perforated bauxite plate protected by a screen to prevent particles from falling into the perforated plate. The reactors (201-205) had a length (height) of 290 mm and an inner diameter of 28 mm and contained an inner lining made of PTFE. Each reactor contained a bed of 100 g CaCO₃ (45-100 µm particle size; surface area (BET) < 10 g/m², type V/90 from Scheruhn Industrie-Mineralien GmbH & Co, Germany) indicated as dark dots in figure 2. The particles were entered into the reactor via inlet 209 (only shown for reactor 201 in figure 2 but each fixation reactors had the same inlet).

The gas-stream 1' exiting the reactor (201) was fed via an outlet at the head section of the first reactor (201) to an inlet at the bottom section of the second reactor (202). The same set up was applied to the other reactors (203-205) of the reactor cascade. The exhaust gas from a reactor could be fed either into another reactor or into the exhaust treatment unit (300). The gas supply to and out of the reactors contained several 3-way valves such that each reactor could be cut off from the gas supply and by-passed. In the exhaust unit (9) the gas was quenched (301) with basic water (solution of KOH), directed over a filter for solid particles (302) and then directed over a glass bead column (303) filled with a KOH solution in isopropanol.

For the experiments the reactor system was first purged with nitrogen. Then the reactors were heated to their operating temperatures (the incineration reactor was heated to 700°C and the fluorine fixation reactors were heated to 150°C). Then the fluorinated material (difluoromethane (DFM)) and air (incineration gas) were fed in the incineration reactor where the difluoromethane incinerated at an operating temperature of 700°C. The generated HF-containing gas stream (1) exiting the incineration reactor (101) through outlet (104) was cooled to a temperature between 150 and 200°C in cooling unit (105) before it entered the fluorine fixation unit (200) due to the service temperature of the PTFE lining in the fixation reactors. In experiment 1 the HF content of the gas (1) entering the first reactor (201) of the fixation unit (200) was 5 vol% and 10 vol% in experiment 2. For experiment 1 the DFM volume flow was 10 Nml/min and in experiment 2 the volume flow was 20 Nml/min. The volume flow of air was 370 ml /min. The HF-gas flow (1) in the fluorine fixation cascade was adjusted that the particles were suspended to create a stable fluidized bed (at volume flows of about 4 and 16 mm/s). The retention times of the HF-gas in a fixation reactor were between 0.1 and 0.6 s. After the time intervals indicated in table 1 and 2 the gas entry to the first fixation reactor (201) was closed and the HF-containing gas stream (1) was fed directly to reactor (202). The bed was removed from the first reactor (201) and analysed.

Particle sizes of the CaF2 particles were determined by laser diffraction and expressed as (d50). A CILAS HR850 granulometer from CILAS ALCATEL was used. The CaF2 content (% conversion) was determined according to ISO 5439-1978.

### Example 1 (5 vol% HF in gas)

| Reaction time [h] | Conversion [%] based on CaCO₃ |
|---|---|
| 10 | 7 |
| 20 | 46 |
| 30 | 80 |

### Example 2 (10 vo % HF in gas)

| Reaction time [h] | Conversion [%] based on CaCO₃ |
|---|---|
| 5 | 17 |
| 10 | 46 |
| 15 | 72 |
| 19.5 | 98 |

The average particle size of the resulting CaF2 particles was 52 µm (d50) for the conversions below 50%. At conversions of greater 80% the particle size remained stable at 32 µm (d50).

### Example 3

The experiment for incinerating a fluorinated polymer was carried out in an incineration reactor similar to incineration reactor (2) illustrated in figure 1. The tubular, vertical incineration reactor (2) was made from Ni-containing steel (1.4841 steel). The reactor had a length of 800 mm and an inner diameter of 32.4 mm. The reactor contained a perforated support structure (25) made of bauxite (diameter of the perforations was about 400 µm) over the gas inlet (20) through which the incineration (24) gas was fed into the reactor. Air was used as incineration gas. The reactor was heated by external resistive heating (26) to a temperature of 550°C. The flow of incineration gas into the reactor was 18 Nl/min. Tetrafluoroethene-ethene (ETFE) copolymer particles were used as fluorinated material (particle sizes were about 500 -1,000 µm). The ETFE particles were fed into the reactor by a jet stream (21) of 4m/s corresponding to 2g ETFE / min. The ETFE particles (22) formed a fluidized bed under these conditions and incinerated at the reactor temperature of 550°C. The generated HF-containing gas stream (1) was fed directly into an exhaust treatment unit (9) where it was quenched with isopropanol/KOH and the HF content was determined by the change of pH. The HF gas stream (1) generated in the incineration reactor was suitable to be directed into a fluorine fixation unit.

## Claims

1. Process for generating calcium fluoride particles having a particle size (d50) of from about 15 µm to about 300 µm and containing at least 80 % by weight of CaF₂, said process comprising
(i) incinerating a fluorinated material comprising one or more partially fluorinated polymers to produce a gas stream comprising HF, CO₂, and H₂O and containing from 0.5 to 50 volume % of HF,
(ii) contacting the gas stream with a fluidized bed comprising calcium carbonate particles in a fluidized bed reactor, wherein the calcium carbonate particles have a particle size (d50) of at least 25 µm and preferably from 30 to 700 µm, more preferably from 35 to 300 µm, most preferably from 40 to 150 µm.

2. The process of any one of the preceding claims wherein the incineration is carried out in a fluidized bed reactor wherein the fluidized bed comprises the fluorinated material.

3. The process according to any one of the preceding claims wherein the calcium fluoride particles have a mean particle size (d50) from 30 to 100 µm.

4. The process according to any one of the preceding claims wherein the calcium fluoride particles have a calcium fluoride content of at least 90% by weight.

5. The process according to any one of the preceding claims wherein the fluidized bed comprises the calcium carbonate particles and wherein the fluidized bed is generated or maintained by a fluidizing medium comprising the gas stream comprising the gaseous HF.

6. The process according to any one of the preceding claims wherein less than 5% by weight of the calcium carbonate particles have a particle size of less than 3 µm.

7. The process according to any one of the preceding claims wherein the calcium carbonate particles have a purity of at least 90 % by weight.

8. The process according to any one of the proceeding claims wherein the particles have a specific surface area (BET) of from 0.1 m²/g to less than 10 m²/g.

## Patentansprüche

1. Verfahren zur Erzeugung von Calciumfluoridteilchen mit einer Teilchengröße (d50) von etwa 15 µm bis etwa 300 µm, die mindestens 80 Gew.-% CaF₂ enthalten, das Verfahren umfassend
(i) Verbrennen eines fluorierten Materials, das ein oder mehrere teilfluorierte Polymere umfasst, sodass ein Gasstrom erzeugt wird, der HF, CO₂ und H₂O umfasst und 0,5 bis 50 Vol.-% HF enthält,
(ii) Inkontaktbringen des Gasstroms mit einer Calciumcarbonatteilchen umfassenden Wirbelschicht in einem Wirbelschichtreaktor, wobei die Calciumcarbonatteilchen eine Teilchengröße (d50) von mindestens 25 µm und vorzugsweise von 30 bis 700 µm, mehr bevorzugt von 35 bis 300 µm, am meisten bevorzugt von 40 bis 150 µm aufweisen.

2. Das Verfahren nach einem der vorhergehenden Ansprüche, wobei die Verbrennung in einem Wirbelschichtreaktor erfolgt, wobei die Wirbelschicht das fluorierte Material umfasst.

3. Das Verfahren nach einem der vorhergehenden Ansprüche, wobei die Calciumfluoridteilchen eine mittlere Teilchengröße (d50) von 30 bis 100 µm aufweisen.

4. Das Verfahren nach einem der vorhergehenden Ansprüche, wobei die Calciumfluoridteilchen einen Calciumfluoridgehalt von mindestens 90 Gew.-% aufweisen.

5. Das Verfahren nach einem der vorhergehenden Ansprüche, wobei die Wirbelschicht die Calciumcarbonatteilchen umfasst und wobei die Wirbelschicht durch ein Wirbelmedium erzeugt oder aufrechterhalten wird, das den gasförmige HF umfassenden Gasstrom umfasst.

6. Das Verfahren nach einem der vorhergehenden Ansprüche, wobei weniger als 5 Gew.-% der Calciumcarbonatteilchen eine Teilchengröße von weniger als 3 µm aufweisen.

7. Das Verfahren nach einem der vorhergehenden Ansprüche, wobei die Calciumcarbonatteilchen eine Reinheit von mindestens 90 Gew.-% aufweisen.

8. Das Verfahren nach einem der vorhergehenden Ansprüche, wobei die Teilchen eine spezifische Oberfläche (BET) von 0,1 m²/g bis weniger als 10 m²/g aufweisen.

## Revendications

1. Procédé pour générer des particules de fluorure de calcium ayant une taille de particules (d50) allant d'environ 15 µm à environ 300 µm et contenant au moins 80 % en poids de CaF₂, ledit procédé comprenant
(i) l'incinération d'un matériau fluoré comprenant un ou plusieurs polymères partiellement fluorés pour produire un courant gazeux comprenant HF, CO₂ et H₂O et contenant de 0,5 à 50 % en volume de HF,
(ii) la mise en contact du courant gazeux avec un lit fluidisé comprenant des particules de carbonate de calcium dans un réacteur à lit fluidisé, dans lequel les particules de carbonate de calcium ont une taille de particules (d50) d'au moins 25 µm et de préférence de 30 à 700 µm, plus préférablement de 35 à 300 µm, le plus préférablement de 40 à 150 µm.

2. Procédé selon l'une quelconque des revendications précédentes dans lequel l'incinération est effectuée dans un réacteur à lit fluidisé dans lequel le lit fluidisé comprend le matériau fluoré.

3. Procédé selon l'une quelconque des revendications précédentes dans lequel les particules de fluorure de calcium ont une taille moyenne de particules (d50) de 30 à 100 µm.

4. Procédé selon l'une quelconque des revendications précédentes dans lequel les particules de fluorure de calcium ont une teneur en fluorure de calcium d'au moins 90 % en poids.

5. Procédé selon l'une quelconque des revendications précédentes dans lequel le lit fluidisé comprend les particules de carbonate de calcium et dans lequel le lit fluidisé est généré ou maintenu par un milieu fluidisant comprenant le courant gazeux comprenant le HF gazeux.

6. Procédé selon l'une quelconque des revendications précédentes dans lequel moins de 5 % en poids des particules de carbonate de calcium ont une taille de particules inférieure à 3 µm.

7. Procédé selon l'une quelconque des revendications précédentes dans lequel les particules de carbonate de calcium ont une pureté d'au moins 90 % en poids.

8. Procédé selon l'une quelconque des revendications précédentes dans lequel les particules ont une surface spécifique (BET) allant de 0,1 m²/g à moins de 10 m²/g.
